# EUROPEAN PATENT APPLICATION

(11) **EP 1 184 927 A1**
(43) Date of publication of application: **06.03.2002**
(21) Application number: 00902897.8
(22) Date of filing: 10.02.2000
(51) Int. Cl.: H01M 10/40, H01M 4/04, H01M 6/14, H01M 2/14

(54) **NONAQUEOUS ELECTROLYTE CELL MANUFACTURING METHOD AND CELL MANUFACTURED THEREBY**

(71) Applicant: MITSUBISHI DENKI KABUSHIKI KAISHA, Tokyo 100-8310 (JP)
(72) Inventor: YOSHIDA, Yasuhiro Mitsubishi Denki KK, Chiyoda-ku, Tokyo 100-8310 (JP); HIROI, Osamu Mitsubishi Denki Kabushiki Kaisha, Chiyoda-ku, Tokyo 100-8310 (JP); NAKAO, Yukiyasu Mitsubishi Denki Kabushiki Kaisha, Chiyoda-ku, Tokyo 100-8310 (JP); SHIOTA, Hisashi Mitsubishi Denki Kabushiki Kaisha, Chiyoda-ku, Tokyo 100-8310 (JP); AIHARA, Shigeru Mitsubishi Denki Kabushiki Kaisha, Chiyoda-ku, Tokyo 100-8310 (JP); TAKEMURA, Daigo, Mitsubishi Denki Kabushiki Kaisha, Chiyoda-ku, Tokyo 100-8310 (JP); URUSHIBATA, Hiroaki, Mitsubishi Denki KK, Chiyoda-ku, Tokyo 100-8310 (JP); MURAI, Michio, Mitsubishi Denki Kabushiki Kaisha, Chiyoda-ku, Tokyo 100-8310 (JP); NISHIMURA, Takashi, Mitsubishi Denki KK, Chiyoda-ku, Tokyo 100-8310 (JP); ARAGANE, Jun, Mitsubishi Denki Kabushiki Kaisha, Chiyoda-ku, Tokyo 100-8310 (JP); KURATA, Tetsuyuki, Mitsubishi Denki KK, Chiyoda-ku, Tokyo 100-8310 (JP)
(74) Representative: Sajda, Wolf E., Dipl.-Phys.
(86) International application number: JP0000736
(87) International publication number: WO0159871

(57) **Abstract**

A battery having non-aqueous electrolyte is prepared by using an electrode or a separator to which a non-aqueous solvent containing inorganic fine particles is applied,
said non-aqueous solvent containing inorganic fine particles being obtained by mixing, with a non-aqueous solvent, inorganic fine particles and at least one cohesion inhibitor selected from the group consisting of a dehydrating agent, an agent for imparting hydrophobic property, a silylation agent and a coupling agent.

## Description

### TECHNICAL FIELD

The present invention relates to a battery and a process for preparing a battery. More particularly, the present invention relates to a battery construction by which high safety can be given to a battery containing a non-aqueous electrolyte, and to a process for preparing the above battery.

### BACKGROUND ART

Downsizing and weight saving for portable electric devices depend heavily on improvement of battery performance. Various developments and upgrades are being made in order to meet the demand. Properties required for batteries include high voltage, high energy density, safety and variety of shape and the like. A lithium ion battery is a battery containing non-aqueous electrolyte, which is expected to achieve high voltage and high energy density, and is actively upgraded presently. Also, studies are conducted concerning lithium metal batteries, which are expected to have further higher energy density.

These batteries containing non-aqueous electrolyte comprise a positive electrode, a negative electrode and an ion conductive layer interposed between the both electrodes as major components. In lithium ion batteries practically used at present, a material in a shape of a plate obtained by applying powder such as lithium cobalt oxide to a current collector is used as an active material for the positive electrode. A material in a shape of a plate obtained by applying powder such as carbon material to a current collector is used as an active material for the negative electrode. Then a battery is formed with the electrodes and an ion conductive layer therebetween.

Normally, the ion conductive layer is filled with an organic liquid electrolyte and the liquid electrolyte contains a highly inflammable, volatile organic low molecular compound. Therefore, it was difficult to ensure safety under abnormal circumstance such as short-circuit of the battery.

In order to solve the above problems caused by liquid electrolyte, gelation of the electrolyte is investigated, for example, as disclosed in USP 5,460,904. It is thought that the liquid electrolyte loses fluidity and gains safety by gelation thereof. However, there were problems such that gelation lowers ion conductivity of the electrolyte making it difficult to achieve excellent battery characteristics and that a battery construction cannot be prepared easily when a gel electrolyte is used.

The present invention has been carried out in order to solve the above problems. The object of the present invention is to provide a process for preparing a battery containing non-aqueous electrolyte having excellent battery characteristics and high safety in a simple and easy way.

### DISCLOSURE OF INVENTION

The present inventors have conducted various studies for solving the above problems and found that safety of a battery can be improved by filling inorganic fine particles among particles of active material for electrodes and into spaces between an electrode and a separator. The inorganic fine particles must be filled as in high density as possible in order for safety to be expressed efficiently. Process for dispersing particles into liquid and applying them onto an electrode or a separator is easy stepwise. Water, alcohol and the like are not preferable for the solvent to which the inorganic fine particles are dispersed in view of problems such as reactivity of an active material, and it is necessary to use non-aqueous solvent. However, it is difficult to disperse inorganic fine particles into non-aqueous solvent, and not easy to introduce them into spaces between electrodes or between an electrode and separator in a sufficient amount. Although it is possible to improve dispersability of the particles by using a dispersant, no process for thermal decomposition of the dispersant after treatment is available in preparing a battery, and the dispersant remains in the battery, which is not preferable in most cases. The present inventors have conducted various investigations also on this point finding that inorganic fine particles can be dispersed efficiently without harmful effect on batteries by adding a dehydrating agent, an agent for imparting hydrophobic property and the like.

The process for preparing a battery having non-aqueous electrolyte of the present invention comprises using an electrode or a separator to which a non-aqueous solvent containing inorganic fine particles is applied, said non-aqueous solvent containing inorganic fine particles being obtained by mixing, with a non-aqueous solvent, at least one cohesion inhibitor selected from the group consisting of a dehydrating agent, an agent for imparting hydrophobic property, a silylation agent and a silane coupling agent (Claim 1).

The process for preparing a battery having non-aqueous electrolyte of the present invention is the process of Claim 1 which includes a step for laminating said electrodes to which said non-aqueous solvent containing inorganic fine particles is applied with said separator before said non-aqueous solvent is thoroughly dried, and drying the same (Claim 2).

The process for preparing a battery having non-aqueous electrolyte of the present invention is the process of Claim 1 which includes a step for flattening the surface of said electrodes or said separator to which said non-aqueous solvent containing inorganic fine particles is applied before said non-aqueous solvent is thoroughly dried (Claim 3).

The battery of the present invention is that prepared according to the process for preparing a battery having non-aqueous electrolyte of Claim 1 (Claim 4).

### BRIEF DESCRIPTION OF DRAWINGS

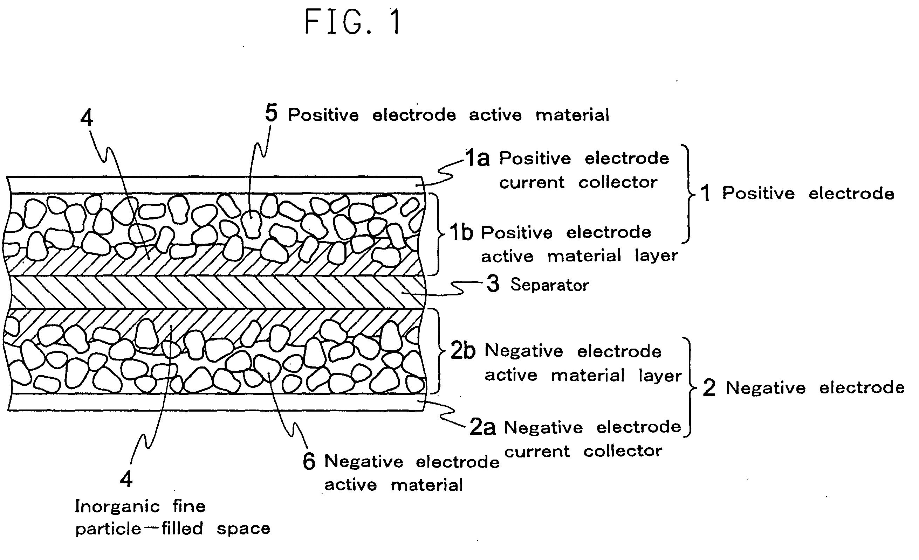

Fig. 1 is a part of a cross sectional view of the battery according to an embodiment of the present invention. In the figure, numeral 1 indicates a positive electrode having a positive electrode active material layer 1b on a positive electrode current collector 1a, numeral 2 indicates a negative electrode having a negative electrode active material layer 2b on a negative electrode current collector 2a, and numeral 3 indicates a separator. Void 4 among the active material particles in the electrode active material layers 1b and 2b and between the electrodes and the separator is the space where inorganic fine particles are filled.

### BEST MODE FOR CARRYING OUT THE INVENTION

In the process for preparing a battery containing a non-aqueous electrolyte according to the present invention, an electrode (positive electrode 1 or positive electrode 2) or a separator 3 to which a non-aqueous solvent containing inorganic fine particles is applied is used, said non-aqueous solvent containing inorganic fine particles being obtained by mixing, with a non-aqueous solvent, at least one cohesion inhibitor selected from the group consisting of a dehydrating agent, an agent for imparting hydrophobic property, a silylation agent and a silane coupling agent.

Useful as an electrode (positive electrode 1, negative electrode 2) is the one obtained by applying active materials (positive electrode active material 5 and negative electrode active material 6) onto current collectors (positive electrode current collector 1a and negative electrode current collector 2a). Examples of the positive electrode active material 5 include oxides or chalcogen compounds of transition metal such as cobalt, manganese and nickel, composite compounds thereof or compounds thereof containing various additives without limitation. Examples of the negative electrode active material 6 preferably include carbonaceous materials, which are used regardless of chemical properties. The positive electrode active material 5 and the negative electrode active material 6 can be used in the form of particles.

As the positive electrode active material and the negative electrode active material, useful are particles for positive electrode active material 5 or particles for negative electrode active material 6 having particle size of 0.3 to 2.0 µm, preferable 1 to 5 µm. When the particle size is too small, covering area of the active material surface covered with an adhesive agent at jointing becomes too large to achieve effective dope and dedope of lithium ion at charge and discharge, for example, in case of using a lithium ion battery. Then it leads to lowering of the battery properties. When the particle size is too large, a thin film cannot be easily prepared. Besides, not only filling density is decreased but also unevenness of the surface of the electrode plate becomes larger, and adhesion with the separator 3 cannot be favorable.

As the current collector, any metal can be used as long as it is stable in the battery, but aluminum can be preferably used for the positive electrode current collector 1a, and copper for the negative electrode current collector 2a. Any shape is available for the current collector such as foil, mesh or expanded metal. For example, a piece of metal foil having a thickness of 3 to 100 µm can be used. When the current collector is too thin, construction of the electrodes tends to become difficult while it tends to become hard to pass through large current. When the current collector is too thick, there is a tendency that weight of battery is increased to make charge-discharge capacitance per weight small.

As to construction of a battery, any one may be used as long as the positive electrode 1 corresponds to the adjacent negative electrode 2 and an electrolyte is filled between spaces to form an ion conductive layer. Lamination of plane electrodes and separators, a winding construction, a folded construction or combination thereof is also possible.

The above electrolyte may be liquid or gel. The electrolyte contains, as an organic low molecular compound, a single or mixed solvent of an ether solvent such as dimethoxyethane or diethyl ether, or a carbonate ester or ester solvent such as ethylene carbonate or propylene carbonate. Further, other additives may be contained therein. As a salt contained in the electrolyte, for example, lithium salt such as LiPF₆, LiClO₄ or LiBF₄ is available in case of a lithium ion battery. Although there is no particular limitation, usually an electrolyte desirably contains 0.3 to 2.0 mol/kg of the salt. When the amount of salt is too small or too much, resistance of the electrolytic solution tends to increase.

When the above electrolyte is used in gel form, there is no particular limitation for gellation process and gellation material. But the gel is formed from preferably a polymer component containing an electrolytic solution and a content of the electrolytic solution is preferably 20 to 98 % by weight. If the electrolytic solution content is less than 20 % by weight, the ion conductivity of the gel itself becomes too low to achieve insufficient ion conductivity to the electrolytic layer when a battery is formed. If the electrolytic solution content is more than 98 % by weight, strength of the gel becomes extremely low, which means effect by formation of a gel is little.

There is no particular limitation for a polymer component, but examples thereof are a resin of a polymer comprising a monomer such as a methacrylic or acrylic acid monomer or a monomer such as alkylene oxide, acrylonitrile, ethylene, styrene, vinyl alcohol or vinyl pyrolidone at the main chain, and a resin of a homopolymer or copolymer of vinylidene fluoride.

A suitable material is selected for the separator among an insulating porous film, mesh, non-woven fabric and the like which have sufficient strength. There is no particular limitation for the material, but a porous film comprising a thermoplastic resin such as polypropylene or polyethylene is preferable from the viewpoint of ensuring adhesion and safety. Although the separator may not be necessary in case of using a gel electrolyte, it may be included.

The thickness of a useful separator is, but not limited to, usually 5 to 100 µm, preferably 15 to 50 µm. When the separator is too thin, there is a tendency that short-circuit can be caused easily and safety cannot be ensured. When it is too thick, charge-discharge capacitance tends to decrease.

Non-conductive inorganic fine particles insoluble in the electrolytic solution can be used for the inorganic fine particles. Examples thereof include, but are not particularly limited to, inorganic materials such as silica, alumina, titanium oxide and clay, or a mixture thereof. Particles of polystyrene, polyolefin, poly(methacrylic acid) and the like may also be added thereto.

The particle size of useful inorganic fine particles is, but not limited to, usually 0.001 to 1 µm, preferably 0.005 to 0.5 µm. When the particle size of the inorganic fine particles is too small, construction of a battery tends to be difficult. When it is too large, there is a tendency that sufficient improvement effect on safety and the like cannot be obtained.

The amount of the inorganic fine particles is, but not particularly limited to, usually 2 to 150 parts by weight based on 100 parts by weight of the active material. When the amount of the inorganic fine particles is too small, there is a tendency that sufficient effect cannot be obtained. When it is too much, charge-discharge capacitance tends to decrease.

Examples of the non-aqueous solvent include an ether solvent such as dioxane or tetrahydrofuran, a ketone solvent such as acetone, an amide solvent such as dimethyl formamide or dimethyl acetamide, N-methyl pyrrolydone and the like. Though there is no particular limitation, the amount of the non-aqueous solvent is, for example, usually 40 to 1000 parts by weight, preferably 80 to 500 parts by weight based on 100 parts by weight of the inorganic fine particles. When the amount of the non-aqueous solvent is too small, construction of a battery tends to be difficult because viscosity of the liquid to which the non-aqueous solvent is mixed is too high. When it is too much, there is a tendency that the inorganic fine particles cannot be introduced in a sufficient amount.

As a binder for the inorganic fine particles an organic polymer may be mixed with the non-aqueous solvent. Examples of the organic polymer include, but are not particularly limited to, a resin of a polymer comprising, at the main chain, a monomer such as a methacrylic or acrylic acid monomer or a monomer such as alkylene oxide, acrylonitrile, ethylene, styrene, vinyl alcohol or vinyl pyrolidone, or a resin of a homopolymer or copolymer of vinylidene fluoride. Various additives such as a cross-linking agent and a plasticizer may be added thereto.

Though there is no particular limitation, the amount of the organic polymer is, for example, usually at most 500 parts by weight, preferably at most 150 parts by weight based on 100 parts by weight of the inorganic fine particles. When the amount of the organic polymer is too much, there is a tendency that ion conductivity of the part comprising inorganic fine particles is lowered and thus, excellent battery characteristics cannot be obtained.

Examples of the dehydrating agent are a dehydrating agent such as calcium sulfate or sodium chloride, and a substance capable of reacting with water in compounds such as metal lithium and metal hydride (including, for example, lithium hydride, lithium aluminum hydride and the like).

The amount of the dehydrating agent depends on the amount of water in the inorganic fine particles and the non-aqueous solvent, but better effect can be achieved by adding the dehydrating agent in an amount of 1.2 to 20 times the amount such that water is completely absorbed. Though there is no particular limitation, the amount of the dehydrating agent is, for example, usually 0.1 to 100 parts by weight, preferably 1 to 20 parts by weight based on 100 parts by weight of the inorganic fine particles and the non-aqueous solvent in total. When the amount of the dehydrating agent is too small, there is a tendency that sufficient dehydrating effect cannot be achieved. When it is too much, battery performance tends to be lowered and efficient decomposition of dehydrating agent tends to be difficult. After dehydration, the dehydrating agent or the reactant is removed by filtration and the like if necessary.

As to the dehydrating agent, any one may be used as long as it lowers hydrophilic property of the inorganic particle surface. Examples thereof are those containing, in a molecule, a bond such as Si-OR (R being an alkyl group), Si-X (X being halogen), Si-N or Ti-OR (R being an alkyl group) and a functional group such as an epoxy group or an isocyanate group which are reactive to the inorganic particle surface, or a bond such as oxyalkylene and a functional group such as a carboxyl group or a hydroxyl group which are adsorptive to the inorganic particle surface, as well as a hydrophobic group of an alkyl group or alkyl fluoride group.

Though there is no particular limitation, the amount of the agent for imparting hydrophobic property is, for example, usually 0.1 to 50 parts by weight, preferably at most 0.3 to 30 parts by weight based on 100 parts by weight of the inorganic fine particles. When the amount of the agent for imparting hydrophobic property is too small, there is a tendency that hydrophobic property cannot be imparted sufficiently, viscosity of the mixture in which this agent is mixed with the non-aqueous solvent is too high and construction of a battery is difficult. When it is too much, the agent that did not react tends to have a damaging effect on a battery.

As to the silylation agent, which can introduce a silyl group to the inorganic particle surface, an organic silicon compound containing a bond between silicon and halogen, nitrogen or oxygen can be used.

Though there is no particular limitation, the amount of silylation agent is, for example, usually 0.1 to 50 parts by weight, preferably 0.3 to 30 parts by weight based on 100 parts by weight of the inorganic fine particles. When the amount of silylation agent is too small, there is a tendency that a silyl group cannot be introduced to the inorganic particle surface sufficiently. When it is too much, the extra silylation agent tends to have a damaging effect on a battery.

The coupling agent has an effect to enhance affinity of the inorganic fine particles to an organic material contained as a binder, or to a metal surface of electrode current collectors or the like. Examples of the coupling agent include a silane coupling agent, a titanate coupling agent and the like. The coupling agent, for example, concurrently contains a group such as an alkoxy group having reactivity with the inorganic particle surface and a group such as an epoxy group, an amino group, a vinyl group, a methacrylic group or a mercapto group having high affinity with the surface of other substance, on a silicon atom or a titanium atom.

The non-limiting amount of the coupling agent is, for example, usually 0.1 to 50 parts by weight, preferably 0.3 to 30 parts by weight based on 100 parts by weight of the inorganic fine particles. When the amount of the coupling agent is too small, there is a tendency that viscosity of the mixture in which the coupling agent is mixed with the non-aqueous solvent is too high and construction of a battery is difficult. When it is too much, the extra coupling agent tends to have a damaging effect on a battery performance.

A battery having a non-aqueous electrolyte can be prepared by inserting a battery body obtained by laminating the positive electrode 1 and the negative electrode 2 with the separator 3 into a battery outer can, and by injecting an electrolyte thereto. By using the electrodes (positive electrode 1, negative electrode 2) or the separator 3 on which the non-aqueous solvent containing inorganic fine particles is applied, the inorganic fine particles can be filled among particles of the active material for electrodes and into spaces between an electrode and a separator, and high safety can be effectively given to a battery having a non-aqueous electrolyte. Fig. 1 shows the case where void 4 is filled with the inorganic fine particles only on the surface area of the positive electrode active material layer 1b and the negative electrode active material layer 2b. However, the inorganic fine particles can also be filled into spaces covering all of the positive electrode active material layer 1b and/or the negative electrode active material layer 2b.

By laminating the electrodes (positive electrode 1, negative electrode 2) on which the non-aqueous solvent containing inorganic fine particles is applied, with the separator 3, before the non-aqueous solvent is thoroughly dried, the inorganic fine particles can be easily filled among the particles of the electrode active material and between the electrodes and the separator without leaving any void at the space between the electrode and the separator. When a binder is added to the inorganic fine particles, there is an additional effect of fixation of the separator and the electrodes and stabilization of battery construction.

By flattening the surface of the electrodes (positive electrode 1, negative electrode 2) or the separator to which the non-aqueous solvent containing inorganic fine particles is applied before the non-aqueous solvent is thoroughly dried, it is possible to reduce unnecessary space present between the inorganic particle layer on the electrode surface and the separator when the separator is laminated. Flattening can be performed by thermal drying, such that the surface of the electrodes or the separator to which the non-aqueous solvent inorganic fine particles is applied is contacted to a surface of a metal plate such as a stainless plate, though flattening method is not limited thereto.

The battery having a non-aqueous electrolyte according to this embodiment shown in Fig. 1 comprises a battery body of a single lamination of electrodes. However, a battery composed of a battery body comprising a plurality of lamination of electrodes may also have the same construction as in this embodiment, and an absorbent material able to absorb an organic low molecular compound can be disposed periphery of the battery body.

Examples of the above lamination structure of battery body include a structure wherein the positive electrode and the negative electrode are alternatively placed between a plurality of separated separators, a structure wherein the positive electrode and the negative electrode are alternatively placed between a wound belt-like separator, a structure wherein the positive electrode and the negative electrode are alternatively placed between a folded belt-like separator and the like.

Hereinafter, more concrete examples of the present invention are illustrated. However, the present invention is not intended to be limited to these examples.

### EXAMPLES 1 to 4 and COMPARATIVE EXAMPLE 1

### (Process for preparing positive electrode)

A positive electrode was prepared by applying a paste for the positive electrode active material obtained by mixing 87 % by weight of LiCoO₂, 8 % by weight of a graphite powder (KS-6 available from LONZA Co., Ltd.) and 5 % by weight of poly(vinylidene fluoride) as a binder resin onto a piece of 20-µm-thick aluminum foil which serves as a positive electrode current collector according to Doctor Blade method in a thickness of about 100 µm.

### (Process for preparing negative electrode)

A negative electrode was prepared by applying a paste for the negative electrode active material obtained by mixing 95 % by weight of mesophase microbeads carbon (available from Osaka Gas Co., Ltd.) and 5 % by weight of poly(vinylidene fluoride) as a binder onto a piece of 12-µm thick copper foil which serves as a negative electrode current collector according to Doctor Blade method in a thickness of about 100 µm.

### (Process for preparing non-aqueous solvent containing inorganic fine particles)

With the mixture of 100 ml of DMF and the silane coupling agent in Table 1 was mixed with 10 g of alumina particles (available from Degussa Co.), and it was stirred thoroughly. Thereto was also added 5 g of PVDF and the mixture was stirred thoroughly.

### (Process for preparing battery)

Each of the positive electrode and the negative electrode was cut into a size of 50 mm × 200 mm, and terminals for current collector were attached thereto. A non-aqueous solvent containing inorganic fine particles was applied onto the positive electrode and the negative electrode. Before the non-aqueous solvent was thoroughly dried, a 25-µm-thick separator (made of a polypropylene porous film) cut into a size of 52 mm × 210 mm was interposed between the positive electrode and the negative electrode. It was rolled out in a width of about 5 cm, fixed by using a strip of Kapton tape, and then dried in a vacuum dryer of 70°C.

Thereafter, the rolled out electrode was put into cylindrically processed film of aluminum laminated sheet. Thereto was injected 7 ml of 1.2 mol/l electrolytic solution containing lithium hexafluorophosphate as an electrolyte in ethylene carbonate and 1,2-dimethoxyethane as a solvent [ethylene carbonate: 1,2-dimethoxyethane (weight ratio) = 1:1].

After that, the aluminum-laminated film was sealed to prepare a battery.

### (Evaluation of Battery)

As to the characteristics of the prepared battery, energy density per weight was 70 Wh/kg.

Evaluation of safety was conducted by heating the battery in charged condition to 150°C and by observing shape change. Results are shown in Table 1. No abnormal condition was found in any of Examples 1 to 4. On the contrary, in case of a battery prepared by using an additive-free non-aqueous solvent instead of the non-aqueous solvent containing inorganic fine particles (Comparative Example 1), gas was generated inside the battery, and the aluminum laminated package was swelled.

**TABLE 1**

| | | | |
|---|---|---|---|
| Ex. 1 | Vinyltrichlorosilane | 1.0 g | Normal |
| Ex. 2 | γ-(methacryloxypropyl) trimethoxysilane | 0.8 g | Normal |
| Ex. 3 | N-phenyl-γ-aminopropyl trimethoxysilane | 0.5 g | Normal |
| Ex. 4 | Hexamethyl disilazane | 0.2 g | Normal |
| Com. Ex. 1 | None | - | Gas generation |

### EXAMPLES 5 to 6

### (Process for preparing battery)

A positive electrode and a negative electrode prepared in the same manner as in Example 1 were cut into a size of 50 mm × 200 mm and terminals for current collector were attached thereto. A non-aqueous solvent containing inorganic fine particles prepared in the same manner as in Examples 3 and 4 was applied onto the both sides of a separator cut into a size of 52 mm × 210 mm. Before the non-aqueous solvent was thoroughly dried, the separator was interposed between the positive electrode and the negative electrode. It was rolled out in a width of about 5 cm, fixed by using a strip of Kapton tape, and then dried in a vacuum dryer of 70°C. After that, a battery was prepared in the same manner as in Example 1.

### (Evaluation of Battery)

As to the characteristics of the prepared battery, energy density per weight was 110 Wh/kg.

Evaluation of safety was conducted by heating the battery in charged condition to 120°C and by observing shape change. No abnormal condition was found in any case.

### EXAMPLE 7

### (Process for preparing battery)

A positive electrode and a negative electrode prepared in the same manner as in Example 1 were cut into a size of 50 mm × 200 mm and terminals for current collector were attached thereto. A non-aqueous solvent containing inorganic fine particles prepared in the same manner as in Example 3 was applied onto the positive electrode and the negative electrode, and flattening was carried out by thermal drying in such a way that the applied surfaces were contacted to a stainless plate. A separator cut into a size of 52 mm × 210 mm was interposed between the positive electrode and the negative electrode. It was rolled out in a width of about 5 cm and fixed by using a strip of Kapton tape. After that, a battery was prepared in the same manner as in Example 1.

### (Evaluation of Battery)

As to the characteristics of the prepared battery, energy density per weight was 100 Wh/kg.

No abnormal condition was found even in case of heating the battery in charged condition to 120°C.

### EXAMPLES 8 to 9

### (Process for preparing battery)

A positive electrode and a negative electrode prepared in the same manner as in Example 1 were cut into a size of 50 mm × 200 mm and terminals for current collector were attached thereto. The positive electrode and the negative electrode, obtained by applying non-aqueous solvent containing inorganic fine particles prepared in the same manner as in Examples 3 and 4 and by drying the same, were dried in a vacuum dryer of 100°C. By using the positive electrode and the negative electrode, a battery was prepared in the same manner as in Example 7.

### (Evaluation of Battery)

As to the characteristics of the prepared battery, energy density per weight was 80 Wh/kg.

No abnormal condition was found even in case of heating the battery in charged condition to 120°C.

The batteries shown in the above examples can be used not only for a lithium ion secondary battery of organic electrolytic solution type or gel electrolyte type, but also for a primary battery such as a lithium battery or another secondary battery.

Furthermore, it can be used for a primary or secondary battery whose battery body is laminated type, winding type, folded type, button type or the like.

In the process for preparing a battery having non-aqueous electrolyte of Claims 1 to 3, inorganic fine particles can be filled among particles of an active material for electrodes and into spaces between an electrode and a separator by using a particular cohesion inhibitor. Therefore, it is possible to give high safety efficiently to batteries having a non-aqueous electrolyte.

In the battery having non-aqueous electrolyte of Claim 4, it is possible to achieve high safety efficiently.

### INDUSTRIAL APPLICABILITY

The battery and process for preparing the same of the present invention can be used not only for a lithium ion secondary battery of organic electrolytic solution type or gel electrolyte type, but also for a primary battery such as a lithium battery or another secondary battery.

Furthermore, it can be used for a primary or secondary battery whose battery body is laminated type, winding type, folded type, button type or the like.

## Claims

1. A process for preparing a battery having non-aqueous electrolyte comprising,
using an electrode or a separator to which a non-aqueous solvent containing inorganic fine particles is applied,
said non-aqueous solvent containing inorganic fine particles being obtained by mixing, with a non-aqueous solvent, inorganic fine particles and at least one cohesion inhibitor selected from the group consisting of a dehydrating agent, an agent for imparting hydrophobic property, a silylation agent and a coupling agent.

2. The process for preparing a battery having non-aqueous electrolyte of Claim 1,
which includes a step for laminating said electrode to which said non-aqueous solvent containing inorganic fine particles is applied with said separator before said non-aqueous solvent is thoroughly dehydrated, and drying the same.

3. The process for preparing a battery having non-aqueous electrolyte of Claim 1,
which includes a step for flattening the surface of said electrode or said separator to which said non-aqueous solvent containing inorganic fine particles is applied before said non-aqueous solvent is thoroughly dehydrated.

4. A battery prepared according to the process for preparing a battery having non-aqueous electrolyte of Claim 1.
